(19) Europäisches Patentamt
European Patent Office
Office européen des brevets

(11) **EP 0 982 836 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
*H02K 7/09* (2006.01)      *G01D 5/14* (2006.01)
*F16C 39/06* (2006.01)

(21) Anmeldenummer: **99810616.5**

(22) Anmeldetag: **12.07.1999**

(54) **Verfahren zum Bestimmen der radialen Position eines permanentmagnetischen Rotors und elektromagnetischer Drehantrieb**

Method for determining the radial position of a permanent magnetic rotor and electromagnetic rotating driving device

Procédé pour déterminer la position radiale d'un rotor à aimant permanent et dispositif électromagnétique d'entraînement en rotation

(84) Benannte Vertragsstaaten:
**CH DE GB LI**

(30) Priorität: **24.08.1998 EP 98810832**

(43) Veröffentlichungstag der Anmeldung:
**01.03.2000 Patentblatt 2000/09**

(73) Patentinhaber: **Levitronix LLC**
**Waltham, MA 02451 (US)**

(72) Erfinder:
• **Schöb, Reto, Dr.**
**8604 Volketswil (CH)**
• **Barletta, Natale**
**8037 Zürich (CH)**

(74) Vertreter: **Sulzer Management AG**
**Patentabteilung / 0067**
**Zürcherstrasse 12**
**8401 Winterthur (CH)**

(56) Entgegenhaltungen:
**EP-A- 0 531 588          WO-A-96/31934**
**WO-A-97/07340**

• **PATENT ABSTRACTS OF JAPAN vol. 16, no. 157 (M-1236), 16. April 1992 (1992-04-16) & JP 04 008911 A (TOSHIBA CORP), 13. Januar 1992 (1992-01-13)**
• **PATENT ABSTRACTS OF JAPAN vol. 97, no. 7, 31. Juli 1997 (1997-07-31) & JP 09 088955 A (KOYO SEIKO CO LTD), 31. März 1997 (1997-03-31)**
• **PATENT ABSTRACTS OF JAPAN vol. 96, no. 1, 31. Januar 1996 (1996-01-31) & JP 07 238928 A (TOSHIBA CORP), 12. September 1995 (1995-09-12)**

**Beschreibung**

Die Erfindung betrifft ein Verfahren sowie eine Sensoranordnung zum Bestimmen der radialen Position eines permanentmagnetischen Rotors in einem elektromagnetischen Drehantrieb, der als lagerloser Motor ausgestaltet ist, gemäss dem Oberbegriff des unabhängigen Anspruchs der jeweiligen Kategorie.

Ein lagerloser Motor mit permanentmagnetischem Rotor ist ein elektromagnetischer Drehantrieb, der einen permanentmagnetisch erregten Rotor und einen Stator umfasst, wobei der Rotor mittels magnetischer Kräfte berührungslos gelagert ist. Das Charakteristikum, dem der lagerlose Motor seine Bezeichnung verdankt, ist es, dass er keine separaten Magnetlager für den Rotor aufweist. Dazu ist der Stator als Lager- und Antriebsstator ausgestaltet und der Rotor als passiv magnetischer Rotor, der sowohl als Lager- als auch als Antriebsrotor dient. Der Stator ist so ausgestaltet bzw. mit elektrischen Wicklungen versehen, dass er ein elektromagnetisches Drehfeld erzeugt, welches zum einen ein Drehmoment auf den Rotor ausübt, das dessen Rotation um die Drehachse antreibt, und welches zum anderen eine beliebig einstellbare Querkraft auf den Rotor ausübt, sodass dessen radiale Position bezüglich einer zur Drehachse senkrechten Ebene vorgebbar bzw. aktiv steuerbar ist. Somit ist der Rotor im Betriebszustand mittels der elektrischen Wicklungen des Stators bezüglich dreier Freiheitsgrade, nämlich der Rotation um die Drehachse sowie der radialen Position in der zur Drehachse senkrechten Ebene (zwei Freiheitsgrade) aktiv ansteuerbar bzw. antreibbar.

Bezüglich dreier weiterer Freiheitsgrade, nämlich Verkippungen bezüglich der zur Drehachse senkrechten Ebene (zwei Freiheitsgrade) und der axialen Position ist der Rotor passiv magnetisch, das heisst nicht ansteuerbar, durch Reluktanzkräfte stabilisiert. Somit ist der Rotor im Betriebszustand durch die magnetische Wechselwirkung zwischen dem Lager/Antriebsstator und dem Rotor sowohl antreibbar als auch berührungslos lagerbar, ohne das hierfür separate Magnetlager vorhanden sind.

In diesem Sinne ist für die folgenden Ausführungen der Begriff "lagerloser Motor mit permanentmagnetischem Rotor" zu verstehen. Bezüglich weiterer Details der Ausgestaltung und der Ansteuerung bzw. Regelung des lagerlosen Motors sei hier auf die WO-A-96/31934 verwiesen.

In der WO-A-96/31934 ist ein solcher lagerloser Motor am Beispiel einer Rotationspumpe offenbart. Bei dieser ist der Rotor des lagerlosen Motors mit Flügeln versehen und bildet somit einen Integralrotor, das heisst, er übernimmt neben der Funktion des Rotors des Elektromotors auch die Funktion des Rotors der Pumpe. Derartige Pumpen sind insbesondere für solche Anwendungen vorteilhaft, bei denen das zu fördernde Fluid nicht verunreinigt werden darf, beispielsweise zum Fördern biologischer Flüssigkeiten wie Blut oder hochreiner Flüssigkeiten wie Reinstwasser. Zudem eignen sich solche Rotationspumpen zum Fördern aggressiver Flüssigkeiten, die mechanische Lager in kurzer Zeit zerstören würden.

Im Vergleich zu konventionellen Pumpen mit magnetisch gelagertem Rotor haben solche Pumpen, die nach dem Prinzip des lagerlosen Motors arbeiten, den Vorteil, extrem kompakt und platzsparend zu sein und trotzdem auch bei hoher Leistungsfähigkeit bzw. Förderleistung alle Vorteile der berührungslosen magnetischen Lagerung des Rotors zu besitzen. Dies ist einer der Gründe, weshalb solche Pumpen unter anderem als Blutpumpen für Anwendungen innerhalb und ausserhalb des Körpers geeignet sind.

Für den Betrieb eines lagerlosen Motors mit einem permanentmagnetisch erregten Rotor, insbesondere für die aktive Regelung der Lage des Rotors, die beispielsweise mittels eines Vektorregelungsverfahrens bzw. eines feldorientierten Regelverfahrens erfolgt, ist es notwendig, die momentane radiale Position des Rotors zu kennen, das heisst seine Lage bezüglich einer zur Drehachse senkrechten Ebene, nämlich der X-Y-Ebene des Statorsystems. In der WO-A-96/31934 werden hierfür verschiedene Möglichkeiten vorgeschlagen: Es kann ein Wirbelstrom-Distanzsensor vorgesehen sein, um den Abstand zu einer im Rotor integrierten leitfähigen Schicht zu messen, oder es können optische Sensoren zur Bestimmung der radialen Position des Rotors verwendet werden. Als weitere Alternative wird vorgeschlagen, acht Flusssonden im Luftspalt zwischen dem Rotor und dem Stator anzuordnen und die radiale Position des Rotors durch gewichtete Summation der mit Hilfe der Flusssonden gemessenen Teilflüsse über jeweils den halben Umfang in X-Richtung und in Y-Richtung sowie jeweils in der Gegenrichtung, Betragsbildung und anschliessende Differenzbildung aus den zur X-Richtung und zur Gegenrichtung bzw. aus den zur Y-Richtung und zur Gegenrichtung gehörenden Anteilen zu ermitteln.

Die vorliegende Erfindung befasst sich mit der Aufgabe, ein anderes Verfahren und eine andere Sensoranordnung vorzuschlagen, mit denen in einfacher Weise, kostengünstig und mit möglichst geringem Aufwand die radiale Position eines permanentmagnetischen Rotors in einem lagerlosen Motor zuverlässig bestimmbar ist.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Erfindungsgemäss wird also ein Verfahren zum Bestimmen der radialen Position eines permanentmagnetischen Rotors in einem elektromagnetischen Drehantrieb, der als lagerloser Motor mit einem Stator und dem magnetisch gelagerten Rotor ausgestaltet ist, vorgeschlagen, bei welchem mittels Sensoren der vom Rotor erzeugte magnetische Fluss im Raum zwischen dem Rotor und dem Stator an mindestens zwei unterschiedlichen Messorten bestimmt wird. Die radiale Position des Rotors wird mit Hilfe des an den Messorten bestimmten magnetischen Flusses und mit Hilfe des magnetischen Flusses, der bei zentrisch angeordnetem Rotor an den Messorten resultiert, ermittelt.

Da für die Bestimmung der radialen Position des Rotors derjenige magnetische Fluss herangezogen wird, den der Rotor an den Messorten erzeugt, wenn er bezüglich seiner radialen Position zentriert ist, reicht es aus, auch bei einer exzentrischen Position des Rotors den von ihm erzeugten Fluss an zwei unterschiedlichen Messorten im Raum zwischen dem Stator und dem Rotor zu bestimmen, um die radiale Position des Rotors zu ermitteln. Somit sind für die Ermittlung der momentanen radialen Position des Rotors weniger Sensoren zum Bestimmen des magnetischen Flusses vonnöten als z. B. für die in der WO-A-96/31934 vorgeschlagene Lösung. Folglich ist das erfindungsgemässe Verfahren insbesondere im Hinblick auf den apparativen Aufwand einfacher und somit auch kostengünstiger. Zudem ist das erfindungsgemässe Verfahren auch bezüglich der notwendigen Signalverarbeitung und -auswertung deutlich weniger aufwendig, ohne das Zugeständnisse an die Zuverlässigkeit der Positionsbestimmung gemacht werden müssen. Das erfindungsgemässe Verfahren hat ferner den Vorteil, sehr flexibel zu sein, denn es eignet sich zumindest für alle praxisrelevanten Formen der Rotormagnetisierung. Auch die Polpaarzahl des permanentmagnetischen Rotors unterliegt keiner Beschränkung.

Im Hinblick auf eine möglichst zuverlässige Bestimmung der radialen Position des Rotors bei möglichst geringen Aufwand, ist es vorteilhaft, wenn die Messorte so gewählt werden, dass die radiale Position des Rotors mit Hilfe des magnetischen Flusses an höchstens drei Messorten für jeden beliebigen Rotorwinkel bestimmbar ist.

Insbesondere bei solchen Ausgestaltungen des Rotors, bei denen die Rotormagnetisierung Nulldurchgänge aufweist, wird der magnetische Fluss im Raum zwischen dem Rotor und dem Stator vorzugsweise an drei verschiedenen Messorten bestimmt, die so gewählt werden, dass für jeden beliebigen Rotorwinkel die Winkellage von mindestens zwei der Messorte von der Winkellage der Nulldurchgänge der Rotormagnetisierung verschieden ist.

Gemäss einer bevorzugten Ausführungsform des erfindungsgemässen Verfahrens wird zusätzlich der magnetische Fluss im Raum zwischen dem Rotor und dem Stator an denjenigen Orten bestimmt und zur Ermittelung der radialen Position des Rotors herangezogen, die bezüglich der Messorte um 180° in Drehrichtung des Rotors gesehen versetzt sind. Durch diese Massnahme können systematische Fehler wie Common-Mode Störungen, Offsets und thermische Driften kompensiert werden.

Die erfindungsgemässe Sensoranordnung zum Bestimmen der radialen Position eines permanentmagnetischen Rotors in einem elektromagnetischen Drehantrieb, der als lagerloser Motor mit einem Stator und dem magnetisch gelagerten Rotor ausgestaltet ist, umfasst mindestens zwei Sensoren zum Bestimmen des vom Rotor erzeugten magnetischen Flusses im Raum zwischen dem Rotor und dem Stator an mindestens zwei unterschiedlichen Messorten. Ferner ist eine Auswerteeinheit vorgesehen, welche die radiale Position des Rotors mit Hilfe des an den Messorten bestimmten magnetischen Flusses und mit Hilfe des magnetischen Flusses, der bei zentrisch angeordnetem Rotor an den Messorten resultiert, bestimmen kann.

Diese Sensoranordnung weist sinngemäss die gleichen Vorteile auf wie das erfindungsgemässen Verfahrens. Aus den bereits erwähnten Gründen sind auch für die erfindungsgemässe Sensoranordnung die folgenden Massnahmen vorteilhaft:

Es sind drei Sensoren so angeordnet, dass die Auswerteeinheit die radiale Position des Rotors mit Hilfe des magnetischen Flusses an den drei zugehörigen Messorten für jeden beliebigen Rotorwinkel bestimmen kann.

Es sind mindestens drei Sensoren vorgesehen, die so angeordnet sind, dass mit ihnen der magnetische Fluss im Raum zwischen dem Rotor und dem Stator an drei unterschiedlichen Messorten bestimmbar ist, deren Lage so ist, dass für jeden beliebigen Rotorwinkel die Winkellage von mindestens zwei Messorten von der Winkellage der Nulldurchgänge der Rotormagnetisierung verschieden ist.

Jeder Sensor umfasst zwei Sensorelemente, die bezüglich der Soll-Drehachse des Rotors um 180° in Drehrichtung des Rotors versetzt zueinander angeordnet sind, die sich also jeweils paarweise bezüglich der Soll-Drehachse gegenüberliegen.

Normalerweise umfasst der Stator eines lagerlosen Motors mit permanentmagnetisch erregten Rotor mehrere radial in Richtung auf den Rotor verlaufende Statorzähne. Die Sensoren sind dann vorzugsweise jeweils in einer Lücke zwischen zwei benachbarten Statorzähnen angeordnet. Durch diese Massnahme wird der durch die Statorzähne fliessende magnetische Steuerfluss zur Steuerung der Rotorposition von den Sensoren nicht mitgemessen. Ferner sind somit keine Sensoren im Luftspalt zwischen den Statorzähnen und dem Rotor vonnöten, sodass dieser Luftspalt kleiner bzw. enger ausgestaltet werden kann, was sich sehr positiv auf die magnetische Kopplung zwischen Stator und Rotor auswirkt.

Bevorzugt ist der Rotor des lagerlosen Motors scheiben- oder ringförmig ausgestaltet. Natürlich sind prinzipiell auch andere Geometrien des Rotors, beispielsweise auch glockenförmige, möglich.

Weitere vorteilhafte Massnahmen und bevorzugte Ausgestaltungen der Erfindungsgegenstände ergeben sich aus den abhängigen Ansprüchen.

Im folgenden wird die Erfindung sowohl in Bezug auf die apparativen als auch in Bezug auf die verfahrenstechnischen Aspekte anhand von Ausführungsbeispielen und anhand der Zeichnung näher erläutert. In der Zeichnung sind identische oder von der Funktion her gleichwertige Teile mit den gleichen Bezugszeichen versehen. In der schematischen, nicht massstäblichen Zeichnung zeigen:

Fig. 1: eine Aufsichtdarstellung von wesentlichen Teilen eines lagerlosen Motors mit permanentmagnetisch erregtem Rotor und mit einem Ausführungsbeispiel der erfindungsgemässen Sensoranordnung,

Fig. 2: einen Schnitt durch den lagerlosen Motor aus Fig. 1 entlang der Linie II-II in Fig. 1,

Fig. 3: wie Fig. 1, jedoch für eine Variante des Ausführungsbeispiels der erfindungsgemässen Sensoranordnung,

Fig. 4: einen Schnitt wie Fig. 2, jedoch für eine weitere Variante,

Fig. 5,6: jeweils eine symbolische Darstellung der Rotormagnetisierung für verschiedenen Ausgestaltungen und Magnetisierungen des Rotors,

Fig. 7: eine Darstellung der Flussverteilungsfunktion für einen vierpolig, blockförmig magnetisierten Rotor bei zentrisch angeordnetem Rotor,

Fig. 8: eine Darstellung zur Verdeutlichung der Festlegung von einigen Winkeln und Strecken im Statorsystem,

Fig. 9: Darstellungen einer möglichen Anordnung der Sensoren für ein zweites Ausführungsbeispiel mit drei Sensoren (Stator nicht dargestellt), und

Fig. 10: Darstellung einer möglichen Anordnung der Sensoren für ein drittes Ausführungsbeispiel mit sechs Sensoren (Stator nicht dargestellt).

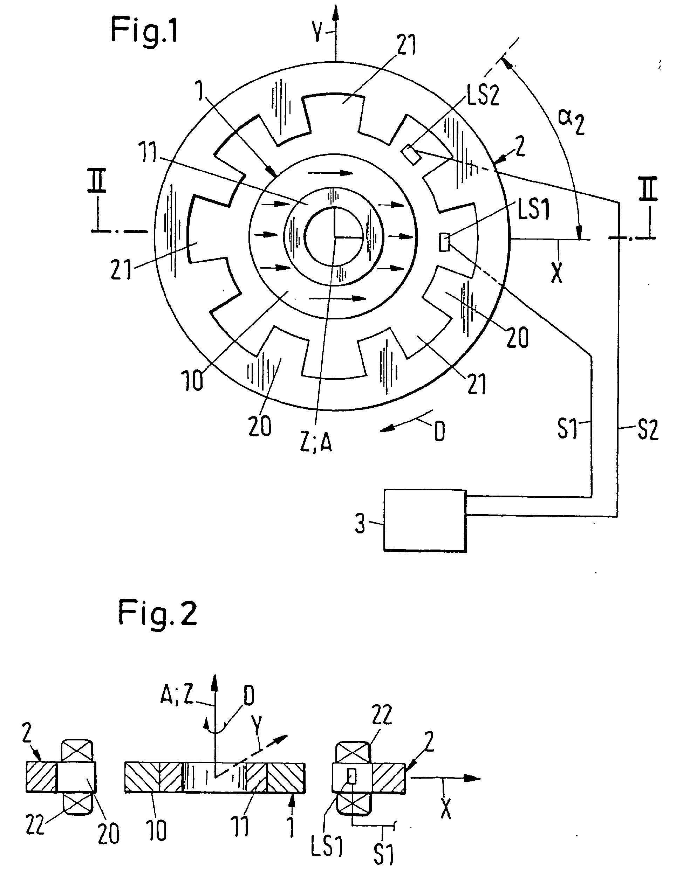

Es wurde bereits eingangs erläutert, was unter einem lagerlosen Motor mit permanentmagnetischem Rotor im Rahmen dieser Ausführungen zu verstehen ist. Fig. 1 zeigt in einer Aufsicht wesentliche Teile einer möglichen Ausgestaltung eines derartigen elektromagnetischen Drehantriebs sowie ein Ausführungsbeispiel der erfindungsgemässen Sensoranordnung. Fig. 2 zeigt diesen lagerlosen Motor in einem Schnitt entlang der Linie II-II in Fig. 1. Der lagerlose Motor hat einen permanentmagnetischen, hier ringförmigen, Rotor 1, der um eine Drehachse A rotierbar ist und der mittels Magnetkräften berührungslos in einem Stator 2 gelagert ist. Die Drehrichtung des Rotors 1 wird durch den Pfeil D angezeigt. Der hier ringförmige Rotor 1 umfasst einen zweipoligen permanentmagnetischen Ring 10 (Polpaarzahl eins), dessen Magnetisierung durch die Pfeile ohne Bezugszeichen angedeutet ist, sowie einen Eisenrückschluss 11, der radial innenliegend bezüglich des permanentmagnetischen Rings 10 angeordnet ist. Der Stator 2 weist mehrere radial in Richtung auf den Rotor 1 verlaufende Statorzähne 20 mit dazwischenliegenden Lücken 21 auf. Um die Statorzähne 20 herum sind elektrische Wicklungen 22 gewickelt, die in Fig. 1 nicht dargestellt und in Fig. 2 angedeutet sind.

Gemäss dem Prinzip des lagerlosen Motors ist der Stator 2 als Lager- und Antriebsstator ausgestaltet, das heisst es ist keine separate magnetische Lagervorrichtung für den Rotor 1 vorgesehen. Dazu umfassen die elektrischen Wicklungen 22 des Stators 2 beispielsweise - wie dies in der bereits zitierten WO-A-96/31934 offenbart ist - eine Antriebswicklung mit der Polpaarzahl p und eine Steuerwicklung mit der Polpaarzahl $p \pm 1$, mit denen ein elektromagnetisches Drehfeld erzeugbar ist, dass sowohl ein antreibendes Drehmoment als auch eine beliebig einstellbare Querkraft auf den Rotor 1 ausübt. Der permanentmagnetische Rotor 1 ist somit bezüglich dreier Freiheitsgrade, nämlich der Rotation um die Drehachse A und seiner radialen Position bezüglich einer zur Drehachse senkrechten Ebene (zwei Freiheitsgrad) aktiv steuerbar bzw. regelbar und bezüglich dreier weiterer Freiheitsgrade, nämlich seiner axiale Auslenkung in Richtung der Drehachse und Verkippungen bezüglich der zur Drehachse A senkrechten Ebene (zwei Freiheitsgrade) passiv magnetisch durch Reluktanzkräfte stabilisiert. Die hierzu notwendigen Versorgungs-, Steuer- und Regeleinrichtungen sind aus Gründen der besseren Übersicht nicht dargestellt.

Üblicherweise werden für die Beschreibung des lagerlosen Motors, insbesondere für seine mathematische Beschreibung, zwei Koordinatensysteme verwendet, nämlich das Statorsystem und das Rotorsystem, die wie folgt festgelegt sind.

Das Statorsystem ist ein kartesisches Koordinatensystem mit den Koordinatenachsen X,Y,Z, das bezüglich des Stators 2 ortsfest ist, und dessen Ursprung im Zentrum des Stators 2 liegt, das heisst im geometrischen Mittelpunkt des vom Stator 2 umgebenen Raums. Die Z-Achse zeigt definitionsgemäss in Richtung der Soll-Drehachse A des Rotors 1, womit diejenige Drehachse gemeint ist, um die der Rotor 1 im Betriebszustand rotiert, wenn er sich in einer exakt zentrierten Position bezüglich des Stators 2 befindet, so wie dies in Fig. 1 dargestellt ist. In Fig. 1 steht die Z-Achse des Statorsystems senkrecht auf der Zeichenebene. Die Festlegung der X- und der Y-Achse in der zur Z-Achse senkrechten Ebene, die den Ursprung enthält ist willkürlich. Die durch die X- und die Y-Achse aufgespannte X-Y-Ebene ist folglich die Ebene, in welcher der Rotor 1 im Betrieb normalerweise rotiert, das heisst falls er nicht verkippt oder axial ausgelenkt ist.

Das Rotorsystem ist ebenfalls ein kartesisches Koordinatensystem mit den Koordinatenachsen X',Y',Z' (nicht dargestellt), das jedoch bezüglich des Rotors 1 ortsfest ist. Sein Ursprung liegt im geometrischen Zentrum des Rotors 1, ist also identisch mit dem Ursprung des Statorsystems, wenn der Rotor 1 bezüglich der axialen (auf die Z-Achse bezogenen) und der radialen (auf die X-Y-Ebene bezogenen) Position zentriert im Stator 2 ist. Die Z'-Achse des Rotorsystems ist durch die Drehachse festgelegt, um die der Rotor 1 rotiert, die Festlegung der X'- und der Y'-Achse ist wiederum willkürlich. Falls der Rotor 1 im Betrieb exakt zentriert bezüglich des Stators 2 und verkippungsfrei rotiert - also um seine Soll-Drehachse A rotiert - ist die Drehachse gleich der Soll-Drehachse A. Somit fallen die Z-Achse des Statorsystems und die Z'-Achse des Rotorsystems zusammen und die X'- sowie die Y'-Achse des Rotorsystems rotieren um diese gemeinsame Z-Achse.

Im folgenden ist mit der Bezeichnung "axiale Richtung" die Richtung der Soll-Drehachse A gemeint, die identisch mit der Richtung der Z-Achse des Statorsystems ist. Mit "axialer Position" ist die Lage bezüglich der axialen Richtung gemeint und mit "radialer Position" die Lage bezüglich der X-Y-Ebene des Statorsystems. Zur Beschreibung der Winkellage des Rotors 1 in der X-Y-Ebene des Statorsystems wird im folgenden der Begriff des Rotorwinkels verwendet. Dieser gibt den (momentanen) Winkel zwischen der bezüglich des Rotors 1 ortsfesten X'- bzw. der Y'-Achse des Rotorsystems und der bezüglich des Stators 2 ortsfesten X- bzw. Y-Achse des Statorsystems an. Es sei ohne Beschränkung der Allgemeinheit vereinbart, dass für den Rotorwinkel Null der Rotor 1 so im Stator 2 orientiert ist, dass die X'-Achse des Rotorsystems mit der X-Achse des Statorsystems zusammenfällt.

Die Fig. 1 und 2 zeigen ferner ein Ausführungsbeispiel der erfindungsgemässen Sensoranordnung zum Bestimmen der radialen Position des permanentmagnetischen Rotors 1. Es sind zwei Sensoren LS1 und LS2 vorgesehen, um den vom Rotor 1 erzeugten magnetischen Fluss an zwei unterschiedlichen Messorten im Raum zwischen dem Rotor 1 und dem Stator 2 zu bestimmen. Mit diesem Raum sind sowohl die Lücken 21 zwischen den Statorzähnen 20 als auch der Luftspalt zwischen den Statorzähnen 20 und dem Rotor 1 gemeint. Die Sensoren LS1,LS2 sind hier beide in der X-Y-Ebene des Statorsystems angeordnet. Sie sind im Statorsystem an Orten platziert, die jeweils durch einen Polarwinkel $\alpha_i$ (i=1,2) gemessen gegen die X-Achse des Statorsystems beschreiben werden, das heisst die zugehörigen Messorte sind durch die Winkel $\alpha_i$ festgelegt. Bei dem hier beschriebenen Ausführungsbeispiel liegt der Sensor LS1 auf der X-Achse, das heisst bei $\alpha_1$=0, und der Sensor 2 liegt bei $\alpha_2$=45°. Als Lagesensoren LS1,LS2 können alle an sich bekannten Sensoren zum Bestimmen eines magnetischen Flusses, wie z. B. Magnetfeldsonden, Hall-Sensoren, magnetoresistive Sonden oder Giant-Magneto-Resistive (GMR) - Sensoren verwendet werden.

Die Sensoren LS1,LS2 sind vorzugsweise - wie dies Fig. 1 bzw. Fig. 2 zeigt - jeweils in einer Lücke 21 zwischen zwei benachbarten Statorzähnen 20 angeordnet, weil durch diese Massnahme der durch die Statorzähne 20 fliessende magnetische Steuerfluss zur Steuerung der Rotorposition von den Sensoren LS1, LS2 nicht mitgemessen wird. Zudem kann durch diese Massnahme der Luftspalt zwischen den Statorzähnen 20 einerseits und dem Rotor 1 andererseits kleiner ausgestaltet werden, was sich positiv auf die magnetische Kopplung zwischen dem Stator 2 und dem Rotor 1 auswirkt. Prinzipiell ist es natürlich auch möglich, die Sensoren LS1,LS2 jeweils auf den radial inneren Enden eines Statorzahns 20 anzubringen.

Die Sensoren LS1 und LS2 sind über Signalleitungen S1,S2 mit einer Auswerteeinheit 3 verbunden, an die sie die von ihnen gemessenen Signale übermitteln. Die Auswerteeinheit 3, die in einer der Versorgungs-, Steuer- oder Regeleinrichtungen integriert sein kann, bestimmt mit Hilfe des aktuellen an den Messorten bestimmten magnetischen Flusses und mit Hilfe desjenigen Flusses, der bei zentrisch angeordnetem Rotor 1 an den Messorten resultiert, die momentane radiale Position des Rotors 1 und übermittelt diese beispielsweise einer nicht dargestellten Regeleinrichtung zum Regeln der radialen Position. Weiter hinten wird erläutert, wie die Auswerteeinheit 3 die radiale Position des Rotors 1 bestimmen kann.

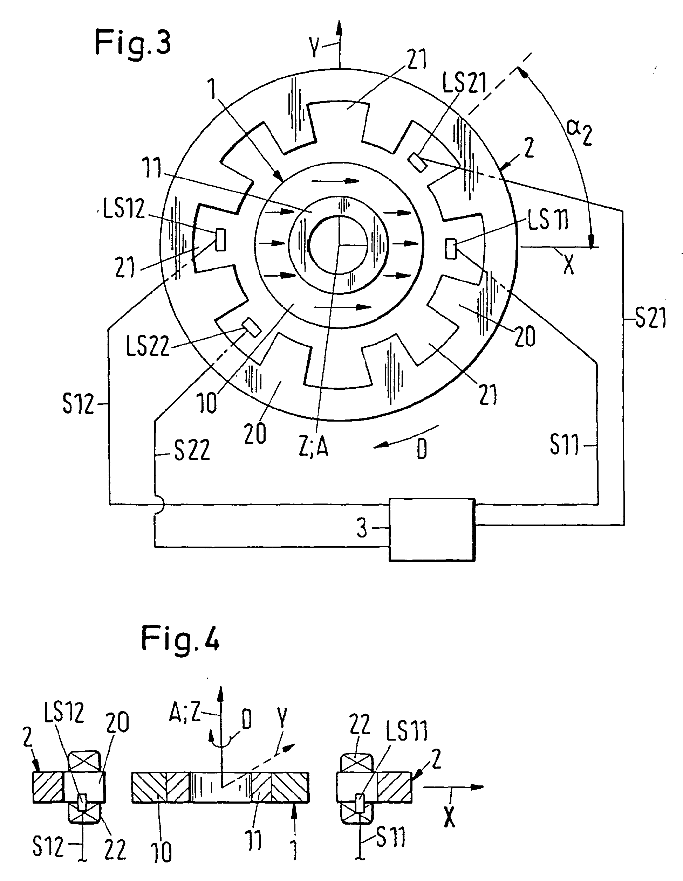

Fig. 3 zeigt in einer zu Fig. 1 analogen Darstellung eine Variante der Sensoranordnung aus Fig. 1. Bei dieser Variante umfasst jeder Sensor LS1 bzw. LS2 jeweils zwei Sensorelemente LS11,LS12 bzw. LS21,L22, wobei die zum gleichen Sensor LS1 bzw. LS2 gehörenden Sensorelemente LS11 und LS12 bzw. LS21 und LS22 bezüglich der Soll-Drehachse A des Rotors 1 um 180° in Drehrichtung D versetzt zueinander angeordnet sind, also bezüglich der Z-Achse diametral gegenüberliegend zueinander oder anders ausgedrückt: Ist das eine Sensorelement bei $\alpha_i$ mit i=1,2 angeordnet, so ist das andere zum gleichen Sensor gehörende Sensorelement bei $\alpha_i$+180°angeordnet. Mit einer derartigen Anordnung können systematische Fehler, wie Offset-Spannungen, thermische Driften und Common-Mode Störungen kompensiert werden, beispielsweise indem jeweils das Differenzsignal der beiden zum gleichen Sensor gehörenden Sensorelemente zur Bestimmung der radialen Position des Sensors herangezogen wird. Die Sensorelemente LS11,LS12,LS21,LS22 sind über Signalleitungen S11,S12,S21,S22 mit der Auswerteeinheit 3 verbunden.

Fig. 4 zeigt in einer zu Fig. 2 analogen Schnittdarstellung eine weitere Variante, die darin besteht, die Sensoren LS1,LS2 bzw. die Sensorelemente LS11,LS12,LS21,LS22 nicht in der X-Y-Ebene anzuordnen, sondern bezüglich der axialen Richtung versetzt zu dieser, beispielsweise so, dass die Sensoren bzw. die Sensorelemente teilweise in axialer Richtung aus dem Stator 2 bzw. aus dem Luftspalt zwischen dem Stator 2 und dem Rotor 1 herausragen. Diese Variante hat den Vorteil, dass auch eine Auslenkung des Rotors 1 bezüglich der axialen Richtung bestimmbar ist.

Bezüglich der konkreten Ausgestaltung des permanentmagnetischen Rotors 1, insbesondere seiner Polpaarzahl und der Form seiner Magnetisierung, gibt es zahlreiche Möglichkeiten, von denen hier nur zwei mit beispielhaftem Charakter erläutert werden sollen.

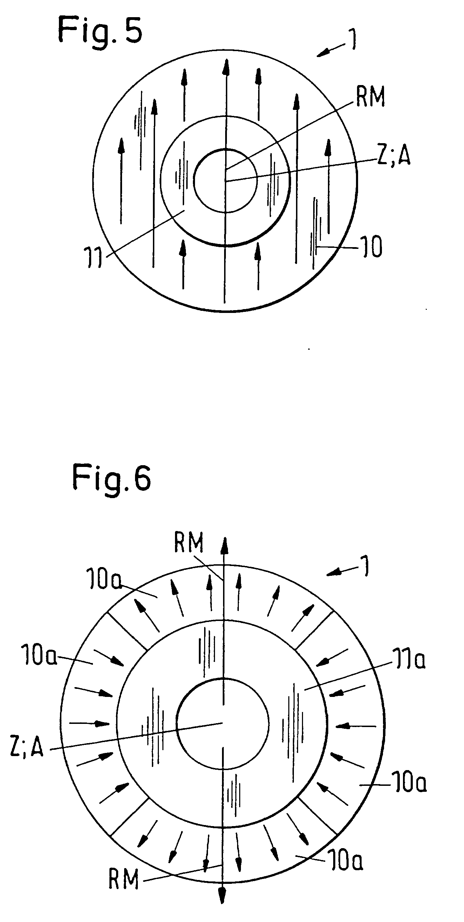

Die Fig. 5 und 6 zeigen jeweils eine Aufsicht auf den permanentmagnetischen Rotor 1, die Pfeile ohne Bezugzeichen deuten symbolisch den Verlauf der Magnetisierung im Rotor 1 an, der mit dem Bezugzeichen RM bezeichnete Pfeil stellt symbolisch die Richtung der resultierenden Rotormagnetisierung dar.

Die Rotormagnetisierung kann üblicherweise durch eine Flussverteilungsfunktion charakteristisch beschrieben werden. Diese gibt im wesentlichen den vom permanetmagnetischen Rotor 1 im Luftspalt zwischen dem Stator 2 und dem Rotor 1 erzeugten magnetischen Fluss in Abhängigkeit einer Winkelvariablen an. Dies soll an einem Beispiel verdeutlicht werden. Ist beispielsweise der Rotor sinusförmig magnetisiert, dann heisst dies, dass die Flussverteilungsfunktion eine Sinus-Funktion ist. Misst man für eine solche Rotormagnetisierung an einem bezüglich des Statorsystems festen Ort im Raum zwischen dem Rotor 1 und dem Stator 2, z. B. an einem der Messorte, die zu den Sensoren LS1,LS2 gehören, den vom permanentmagnetischen Rotor 1 erzeugten magnetischen Fluss und dreht den Rotor 1 um 360° um die Soll-Drehachse A, so ist der gemessene magnetische Fluss eine Sinusfunktion des Rotorwinkels.

Fig. 5 zeigt eine ringförmige Ausgestaltung des Rotors 1 mit einem permanentmagnetischen Ring 10 und einem Eisenrückschluss 11, der radial innenliegend bezüglich des Rings 10 angeordnet ist. Dieser Rotor 1 ist zweipolig (Polpaarzahl eins), sinusförmig magnetisiert, das heisst die Flussverteilungsfunktion ist für diesen Rotor 1 eine Sinusfunktion, welche die gleiche Periodizität aufweist wie der geometrische Rotorwinkel, das heisst für einer Umdrehung des Rotors 1 wird eine Periode der Flussverteilungsfunktion durchlaufen. Die Richtung der Rotormagnetisierung ist durch den Pfeil RM symbolisch dargestellt. Diese Ausgestalltung des Rotors 1 entspricht den in den Fig. 1-4 dargestellten Rotoren.

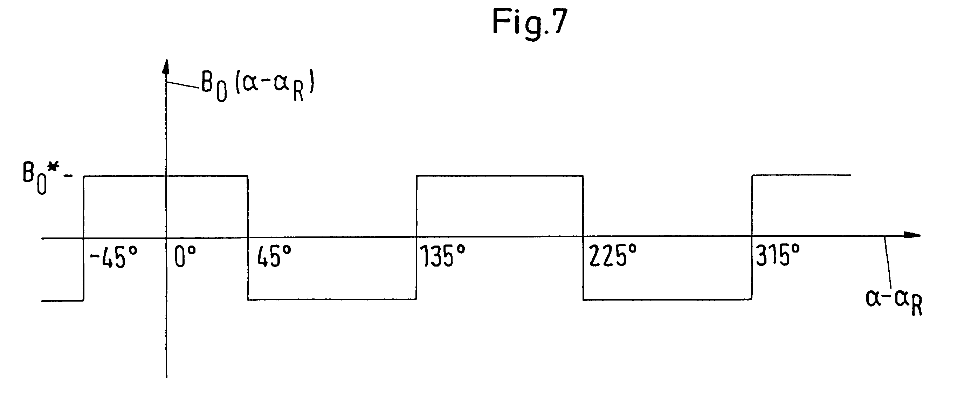

Fig. 6 zeigt eine ringförmige Ausgestaltung des Rotors 1 mit vier permanentmagnetischen Ringsegmenten 10a, die so in Umfangsrichtung nebeneinanderliegend angeordnet sind, dass sie einen Ring bilden. Radial innenliegend bezüglich dieses Rings ist ein ringförmiger Eisenrückschluss 11a vorgesehen. Jedes Ringsegment 10a ist homogen radial magnetisiert, wobei benachbarte Ringsegmente 10a jeweils in die entgegengesetzte Richtung magnetisiert sind, das heisst die Ringsegmente 10a sind wechselweise radial nach aussen und radial nach innen magnetisiert. Diese Ausgestaltung ist ein vierpolig (Polpaarzahl zwei) blockförmig oder rechteckförmig magnetisierter Rotor 1. Die Flussverteilungsfunktion ist eine Rechteckfunktion, die für eine vollständige Umdrehung des Rotors zweimal ihre Periode durchläuft. Die Richtung der Rotormagnetisierung RM ist nicht mehr eindeutig, wie dies die beiden Pfeile RM andeuten. Die zugehörige Flussverteilungsfunktion $B_0$ ist in Fig. 7 in Abhängigkeit der Winkeldifferenz $\alpha - \alpha_R$ dargestellt, wobei $\alpha$ als Laufvariable den Polarwinkel eines beliebigen Aufpunkts im Raum zwischen dem Stator 2 und dem Rotor 1 gemessen gegen die X-Achse angibt und $\alpha_R$ den Rotorwinkel. Der Index "0" bei $B_0$ zeigt an, dass diese Flussverteilungsfunktion für den Fall gilt, dass der Rotor 1 bezüglich seiner radialen und seiner axialen Position im Stator 2 zentriert ist.

Da die Form der Rotormagnetisierung im konkreten Anwendungsfall bekannt ist, ist auch die Flussverteilungsfunktion $B_0$ für den zentriert angeordneten Rotor 1 bekannt.

Natürlich sind auch noch andere als die hier beschriebenen Rotorgeometrien und -magnetisierungen möglich, beispielsweise scheiben- oder glockenförmige Rotoren oder solche mit höheren Polpaarzahlen und/oder qualitativ anderen Flussverteilungsfunktionen, z. B. trapezförmige Magnetisierungen.

Beim Betrieb eines lagerlosen Motors mit permanentmagnetisch erregtem Rotor ist es üblicherweise notwendig, beispielsweise für die Antriebsregelung, die typischerweise mittels einer Vektorreglung bzw. einer feldorientierten Regelung erfolgt, die momentane Richtung oder Lage der Rotormagnetisierung im Statorsystem und damit den geometrischen Rotorwinkel zu kennen bzw. zu bestimmen. Verfahren zu deren Bestimmung sind beispielsweise in der bereits zitierten WO-A-96/31934 offenbart, sodass diese Grössen für das folgende als bekannt vorausgesetzt werden dürfen.

Die in der WO-A-96/31934 offenbarten Verfahren werden hier nicht näher erläutert. Es sei jedoch erwähnt, dass je nach der konkreten Form der Rotormagnetisierung die Sensoren LS1,LS2 der erfindungsgemässen Sensoranordnung auch zur Bestimmung der momentanen Lage der Rotormagnetisierung bezüglich des Statorsystem verwendet werden können.

Alternativ zu den in der WO-A-96/31934 beschriebenen Verfahren ist es auch möglich, die Richtung der Rotormagnetisierung bezüglich des Statorsystems mittels Magnetfeldsensoren zu bestimmen, die in axialer Richtung versetzt zum Rotor 1 und ortsfest bezüglich des Statorsystems angeordnet sind und die das Streufeld, insbesondere das axiale Streufeld, des permanentmagnetischen Rotors messen. Mit diesen Magnetfeldsensoren werden beispielsweise mindestens zwei Teilflüsse des Streufelds gemessen. Die Teilflüsse werden in mindestens zwei verschiedenen parallel zur X-Y-Ebene liegenden Richtungen bestimmt. Aus den Teilflüssen lässt sich dann die Lage der Rotormagnetisierung mathematisch, beispielsweise mittels einer trigonometrischen Analyse, oder über einen Vergleich mit einer elektronisch gespeicherten Nachschlagtabelle (look-up table) ermitteln. Die Messung im Streufeld, insbesondere im axialen Streufeld, des Rotors 1 hat den Vorteil, dass aus einer solchen Messung auch die axiale Position des Rotors 1 bestimmbar ist, weil beispielsweise die Amplitude bzw. der Betrag des axialen Streufelds vom axialen Abstand vom Rotor 1 abhängig ist. Diese Abhängigkeit kann messtechnisch erfasst und abgespeichert werden, sodass beim Betrieb des lagerlosen Motors anhand eines Vergleichs der gemessenen Amplitude oder des gemessenen Betrags des axialen Streufelds mit den abgespeicherten Werten die axiale Position des Rotors 1 bestimmbar ist.

Natürlich ist es auch möglich, zur Bestimmung der axialen Position des Rotors geeignete separate Sensoren vorzusehen.

Da es für das Verständnis der vorliegenden Erfindung unwesentlich ist, nach welchem Verfahren die Lage bzw. Richtung der Rotormagnetisierung bezüglich des Statorsystems bestimmt wird, wird für das Folgende der Einfachheit halber angenommen, dass die momentane Lage der Rotormagnetisierung im Statorsystem bekannt ist.

Für eindeutige Rotormagnetisierungen (siehe Fig. 5) ist dann auch gleichzeitig der geometrische Rotorwinkel bekannt, für nicht eindeutige Rotormagnetisierungen (siehe Fig. 6) gehören zu jeder Lage der Rotormagnetisierung bezüglich des Statorsystems zwei sich um 180° unterscheidende oder im allgemeinen mehrere geometrische Rotorwinkel. Dies bedeutet jedoch für die Praxis keine Einschränkung, denn diese zwei oder mehr Rotorwinkel gehören zu magnetisch äquivalenten Winkellagen des Rotors 1 im Stator 2, sodass auch für nicht eindeutige Rotormagnetisierungen mit der Richtung der Rotormagnetisierung im Statorsystem de facto der geometrische Rotorwinkel bekannt ist.

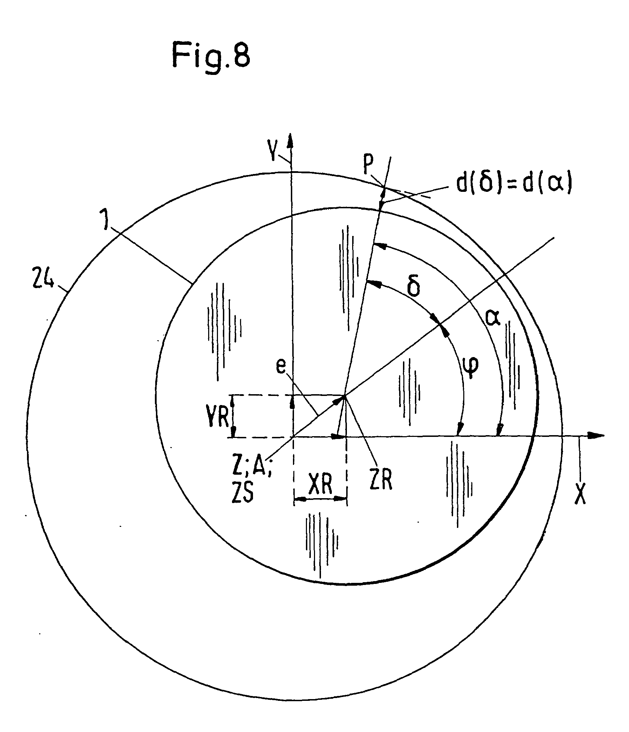

Die Bestimmung der radialen Position des Rotors 1 im Stator 2 durch die Auswerteeinheit 3 erfolgt mit Hilfe des an den Messorten mittels der Sensoren LS1,LS2 bestimmten magnetischen Flusses und mit Hilfe desjenigen magnetischen Flusses, der bei zentrisch angeordnetem Rotor an den Messorten resultiert. Letztere Grösse lässt sich ohne zusätzliche Messung ermitteln, weil zum einen für einen beliebig magnetisierten vorgegebenen permanentmagnetischen Rotor 1 die Form der Rotormagnetisierung und somit die Flussverteilungsfunktion $B_0$ für den zentrisch angeordneten Rotor bekannt ist, und zum anderen die momentane Lage der Rotormagnetisierung im Statorsystem bzw. der Rotorwinkel $\alpha_R$ bekannt ist. Bevor nun näher erläutert wird, wie die Bestimmung der radialen Position des Rotors 1 erfolgen kann, werden zunächst anhand von Fig. 8 einige Grössen festgelegt bzw. erklärt. Da es für das Verständnis ausreicht, wird für das Folgende der Einfachheit halber davon ausgegangen, dass der Rotor 1 bezüglich der axialen Richtung nicht ausgelenkt ist, sich also in der X-Y-Ebene des Statorsystems befindet. Eine eventuell vorhandene Auslenkung des Rotors 1 in axialer Richtung kann jedoch in einfacher Weise berücksichtigt werden.

In Fig. 8 ist der Rotor 1 durch die innere Kreislinie dargestellt. Die äussere Kreislinie repräsentiert die radial äussere Begrenzung 24 des Luftspalts zwischen dem Rotor 1 einerseits und den in Fig. 8 nicht dargestellten Statorzähnen 20 andererseits, das heisst die Statorzähne 20 reichen von aussen kommend bis an die radial äussere Begrenzung 24 des Luftspalts.

Fig. 8 zeigt den Rotor 1 in einer exzentrischen Position. Mit ZS ist das Zentrum des Stators 2 bezeichnet, also der Ursprung des Statorsystems mit den Koordinatenachsen X,Y,Z. Die Z-Achse steht senkrecht auf der Zeichenebene. ZR bezeichnet das Zentrum des Rotors 1, also den Ursprung des Rotorsystems. Falls der Rotor bezüglich seiner radialen Position zentriert ist, fallen ZS und ZR zusammen. Der Verbindungspfeil zwischen ZS und ZR beschreibt die radiale Auslenkung des Rotors 1 aus seiner zentrierten Position. Der Betrag der Auslenkung, also die Länge des Verbindungspfeils, ist mit e bezeichnet, der Winkel zwischen der Auslenkung des Rotors 1 und der X-Achse des Statorsystems mit φ. Die Auslenkung hat im Statorsystem die kartesischen Koordinaten XR und YR. Dies sind natürlich auch die kartesischen Koordinaten des Zentrums des Rotors ZR bzw. des Ursprungs des Rotorsystems gemessen im Statorsystem.

Mit d wird der Abstand des Rotors 1 von der radial äusseren Begrenzung 24, also die Breite des Luftspalts bezeichnet. Der Abstand d ist bei einer exzentrischen Lages des Rotors 1 natürlich winkelabhängig. Als Laufvariable für den Winkel dienen die beiden Winkelkoordinaten α und δ. Ist P ein beliebiger Aufpunkt auf der radial äusseren Begrenzung 24, so gibt δ den Winkel zwischen der Verbindungslinie dieses Aufpunkts P mit dem Zentrum ZR des Rotors 1 und der durch den Winkel φ beschrieben Richtung der Auslenkung an; α gibt den Winkel zwischen genannter Verbindungslinie und der X-Achse des Statorsystems an. Da für alle praxisrelevanten Fälle die Auslenkung e sehr klein ist, gilt in sehr guter Näherung α=φ+δ. Der Fehler dieser Näherung ist in der Praxis typischerweise kleiner als 0.1°. Das heisst, in guter Näherung ist α der Polarwinkel des Aufpunkts P in der X-Y-Ebene des Statorsystems gemessen gegen die X-Achse. Deshalb wird dieser Winkel auch mit dem gleichen Symbol α bezeichnet wie der bereits weiter vorne eingeführte Polarwinkel, der die Winkellage der Sensoren LS1,LS2 bzw. der Messorte beschreibt.

Der Abstand zwischen dem Rotor 1 und dem Aufpunkt P auf der radial äusseren Begrenzung 24 wird mit d(α) bzw. d(δ) bezeichnet. Mit $d_0$ wird die winkelunabhängige Breite des Luftspalts für den zentrierten Rotor 1 bezeichnet, also für den Fall ZR=ZS. Diese Breite $d_0$ entspricht der halben Differenz zwischen dem Innendurchmesser des Stators 2 und dem Aussendurchmesser des Rotors 1. Für den Abstand d(α) bzw. d(δ) gilt die folgende Beziehung:

$$d(\alpha) = d_0 - e \cdot \cos(\alpha - \varphi) \qquad \text{bzw.} \qquad d(\delta) = d_0 - e \cdot \cos(\delta)$$

Die magnetische Flussverteilung im Luftspalt zwischen Rotor 1 und Stator 2 bei zentriertem Rotor 1, das heisst bei der Auslenkung e=0, wird durch die Flussverteilungsfunktion:

$$B_0(\alpha) = B_0{}^* \cdot f(\alpha)$$

beschrieben, wobei $B_0{}^*$ die Amplitude bezeichnet und $f(\alpha)$ eine Winkelfunktion von $\alpha$. Der Index "0" zeigt an, dass diese Flussverteilungsfunktion für den zentrierten Rotor 1 gilt. Diese Flussverteilungsfunktion $B_0(\alpha)$ kann aus der Rotormagnetisierungsfunktion und dem Rotorwinkel, der mit $\alpha_R$ bezeichnet wird, bzw. der Richtung der Rotormagnetisierung im Statorsystem bestimmt werden. Die Rotormagentisierungsfunktion und der Rotorwinkel $\alpha_R$ bzw. die Richtung der Rotormagnetisierung im Statorsystem sind bekannt, sodass dann auch die Flussverteilungsfunktion $B_0(\alpha)$ bestimmbar ist. Eine eventuell vorhandene Auslenkung des Rotors 1 bezüglich der axialen Richtung kann bei der Bestimmung von $B_0(\alpha)$ berücksichtigt werden.

Als Beispiel für eine Flussverteilungsfunktion $B_0(\alpha)$ im Luftspalt bei zentriertem Rotor 1 zeigt Fig. 7 eine solche Flussverteilungsfunktion $B_0(\alpha-\alpha_R)$ für einen vierpolig, blockförmig magnetisierten Rotor 1 (siehe Fig. 5) als Funktion der Winkeldifferenz $(\alpha-\alpha_R)$, wobei $\alpha_R$ der gegen die X-Achse gemessenen Rotorwinkel ist.

Die Flussverteilung im Luftspalt für den exzentrischen Rotor 1 mit der Auslenkung e wird durch eine Flussverteilungsfunktion $B_e(\alpha)$ beschrieben. Für diese gilt:

$$B_e(\alpha) = B_0(\alpha) \cdot d_0/d(\alpha)$$

Mit einer dimensionslosen Exzentrität $\varepsilon = e/d_0$ ergibt sich:

$$B_e(\alpha) = B_0(\alpha) / [1 - \varepsilon \cdot \cos(\alpha-\varphi)]$$

Für $\varepsilon \ll 1$ gilt aufgrund einer Reihenentwicklung:

$$B_e(\alpha) / B_0(\alpha) \approx 1 + \varepsilon \cdot \cos(\alpha-\varphi)$$

Wie bereits erwähnt, sind die beiden Sensoren LS1,LS2 im Statorsystem an Orten platziert, die durch die Polarwinkel $\alpha_1$ und $\alpha_2$ beschrieben werden (siehe z. B. Fig. 1), das heisst, die beiden unterschiedlichen Messorte sind durch die Winkel $\alpha_1$ und $\alpha_2$ festgelegt. Somit ist aufgrund der von den Sensoren LS1 und LS2 erfassten Signale der Wert der Flussverteilungsfunktion $B_e(\alpha)$ für die beiden Winkel $\alpha_1$ und $\alpha_2$, nämlich $B_e(\alpha_1)$ und $B_e(\alpha_2)$, bekannt. Wie bereits erläutert kann ferner die Flussverteilungsfunktion $B_0(\alpha)$ für den zentrierten Rotor 1 bestimmt werden, sodass auch die Werte dieser Funktion für die Winkel $\alpha_1$ und $\alpha_2$, nämlich $B_0(\alpha_1)$ und $B_0(\alpha_2)$, ermittelt werden können. Somit resultieren die beiden Bestimmungsgleichungen,

$$\varepsilon \cdot \cos(\alpha_1-\varphi) = [B_e(\alpha_1)/B_0(\alpha_1)] - 1 \qquad \text{und} \qquad \varepsilon \cdot \cos(\alpha_2-\varphi) = [B_e(\alpha_2)/B_0(\alpha_2)] - 1$$

mit denen die beiden unbekannten Grössen $\varepsilon$ und $\varphi$ berechnet werden können.

Somit sind die beiden kartesischen Koordinaten XR und YR der Auslenkung und damit die Lage des Zentrums ZR des Rotors 1 bezüglich des Statorsystems bekannt:

$$XR = d_0 \cdot \varepsilon \cdot \cos(\varphi) \qquad \text{und} \qquad YR = d_0 \cdot \varepsilon \cdot \sin(\varphi)$$

Folglich ist die radiale Position des Rotors 1 bezüglich des Statorsystems bekannt.

Insbesondere für zweipolig magnetisierte Rotoren 1 resultiert eine besonders einfache Auswertung der Bestimmungsgleichungen für den Fall $\alpha_1=0°$ und $\alpha_2=90°$, das heisst, wenn der erste Messort auf der X-Achse und der zweite Messort auf der Y-Achse des Statorsystems liegt.

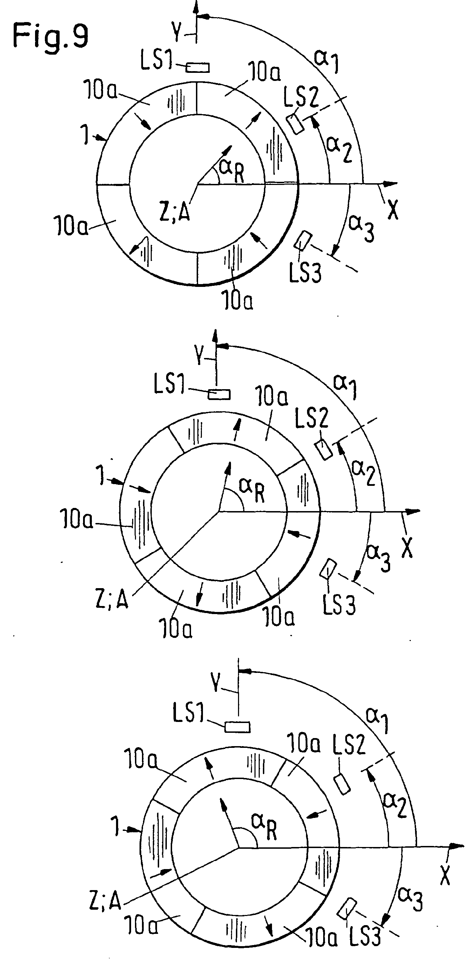

In der Praxis realisierte Formen der Rotormagnetisierung, z. B. sinusförmige, blockförmige oder trapezförmige, und damit auch die zugehörigen Flussverteilungsfunktionen, weisen oftmals einen oder mehrere Nulldurchgänge auf (siehe z. B. Fig. 7). Liegt nun ein solcher Nulldurchgang gerade bei der gleichen Winkellage wie einer der Sensoren LS1,LS2, beispielsweise bei $\alpha_1$, - was bei drehendem Rotor regelmässig zutrifft - so bleibt in der entsprechenden Bestimmungsgleichung der Ausdruck $B_e(\alpha_1)/B_0(\alpha_1)$ unbestimmt, sodass die Grössen $\varepsilon$ und $\varphi$ für diesen Rotorwinkel nicht mehr eindeutig bestimmt werden können. In der Praxis wirkt sich dieser Umstand, insbesondere bei zweipolig magnetisierten Rotoren, meistens nicht besonders störend aus, weil nur für sehr wenige spezielle Rotorwinkel $\alpha_R$ dieser Zustand eintritt, dass eine der Bestimmungsgleichungen nicht oder nur schwer auswertbar ist. Mit einem zweiten Ausführungsbeispiel der Erfindung, welches im Folgenden anhand von Fig. 9 beschrieben wird, kann aber dieser Zustand vermieden werden.

Bei diesem zweiten Ausführungsbeispiel sind drei Sensoren LS1, LS2, LS3 vorgesehen, mit denen der magnetische Fluss im Raum zwischen dem Rotor 1 und dem Stator 2 an drei unterschiedlichen Messorten bestimmbar ist. Die Positionen der Sensoren LS1,LS2,LS3 bzw. die Messorte, beschrieben durch die Winkel $\alpha_1$, $\alpha_2$, $\alpha_3$, sind so angeordnet, dass die Auswerteeinheit 3 (in Fig. 9 nicht dargestellt) die radiale Position des Rotors (1) mit Hilfe des magnetischen Flusses an den drei Messorten für jeden beliebigen Rotorwinkel $\alpha_R$ bestimmen kann.

Dazu werden gemäss dem zweiten Ausführungsbeispiel die drei Sensoren LS1, LS2, LS3 derart angeordnet, dass für jede Drehwinkelstellung des Rotors 1, also für jeden beliebigen Rotorwinkel $\alpha_R$, die Winkellage $\alpha_1$, $\alpha_2$, $\alpha_3$ von mindestens zwei Messorten von der Winkellage der Nulldurchgänge verschieden ist. Die Winkel zwischen den einzelnen Messorten werden also derart gewählt, dass bei keiner Stellung des Rotors 1 mehr als ein Nulldurchgang der Rotormagnetisierung bzw. der Flussverteilungsfunktion mit einem Messort übereinstimmt.

Fig. 9 zeigt eine solche Anordnung der Sensoren LS1, LS2, LS3 am Beispiel eines vierpolig, blockförmig magnetisierten Rotors 1 (siehe Fig. 5). In Fig. 9 sind die drei Situationen dargestellt, bei denen jeweils einer der Sensoren LS1,LS2,LS3 bei einem Nulldurchgang der Flussverteilungsfunktion liegt, in der oberen Abbildung ist dies der Sensor LS1, in der mittleren der Sensor LS2 und in der unteren der Sensor LS3. Es ist zu erkennen, dass in jeder dargestellten Situation, also für jeden beliebigen Rotorwinkel $\alpha_R$, zwei der Sensoren LS1,LS2,LS3 nicht bei einem Nulldurchgang liegen. Der Stator 2 und die Signalleitungen sind in Fig. 9 nicht dargestellt.

Aufgrund des dritten Sensors LS3 bzw. des dritten Messorts, der durch den Winkel $\alpha_3$ beschrieben wird, erhält man eine dritte Bestimmungsgleichung:

$$\varepsilon \cdot \cos(\alpha_3 - \varphi) = [B_e(\alpha_3)/B_0(\alpha_3)] - 1$$

Wegen der vorangehend genannten Anordnung der Sensoren LS1, LS2, LS3 sind immer, das heisst für jeden beliebigen Rotorwinkel $\alpha_R$, mindestens zwei der drei Bestimmungsgleichungen auswertbar, sodass die Grössen $\varepsilon$ und $\varphi$ für jeden beliebigen Rotorwinkel $\alpha_R$ eindeutig mit Hilfe dieser drei Sensoren LS1,LS2,LS3 bestimmbar sind und somit auch die radiale Position des Zentrums ZR des Rotors 1.

In der Praxis geht man vorteilhafterweise so vor, dass man jeweils die beiden Bestimmungsgleichungen zur Auswertung heranzieht, bei denen der Betrag von $B_e(\alpha)$ oder $B_0(\alpha)$ am grössten ist.

Falls alle drei Sensoren LS1, LS2 und LS3 ein ausreichend starkes Signal ergeben, so ist das System der drei Bestimmungsgleichungen überbestimmt. Dieser Zustand kann vorteilhaft zum Abgleichen der drei Sensoren LS1, LS2, LS3, beispielsweise für einen Offset-Abgleich, oder zur Kompensation anderer systematischer Fehler, wie z. B. Temperaturdriften, verwendet werden.

Die Anordnung der drei Lagesensoren LS1,LS2,LS3 wird nun noch anhand des konkreten Beispiels eines vierpolig, blockförmig magnetisierten Rotors 1 (siehe Fig. 5) detailliert beschrieben. Die zugehörige Flussverteilungsfunktion im Luftspalt für den zentrierten Rotor 1 ist in Fig. 7 dargestellt. Die Messorte, beschrieben durch die Winkel $\alpha_1$, $\alpha_2$, $\alpha_3$ sind nun so zu wählen, dass für keinen Rotorwinkel $\alpha_R$ mehr als einer der Funktionswerte $B_0(\alpha_1)$, $B_0(\alpha_2)$, $B_0(\alpha_3)$ einem Nulldurchgang entspricht. Diese Bedingung ist erfüllt, falls keiner der Sensoren LS1,LS2,LS3 um einen Winkel von $k \cdot 90°$ (mit $k = 0, \pm 1, \pm 2, \pm \ldots$) bezüglich eines anderen Sensors versetzt angeordnet ist. Folglich muss die Differenz $\alpha_i - \alpha_j$ für alle i,j=1,2,3 und i≠j verschieden von $k \cdot 90°$ sein.

In der Praxis sind die senkrechten Flanken in der Funktion $B_0(\alpha - \alpha_R)$ bei $\alpha - \alpha_R = 45° \pm k \cdot 90°$ ($k = 0, \pm 1, \pm 2, \pm \ldots$) wie sie Fig. 7 zeigt über einen endlichen Winkelbereich "verschmiert", der durch einen Winkel $\pm \alpha_S$ um die theoretische Flanke herum beschrieben werden kann. Deshalb ist es für die Praxis vorteilhaft, die Sensoren LS1,LS2,LS3 so anzuordnen, dass für jeden Rotorwinkel $\alpha_R$ die Winkellage von mindestens zwei Messorten ausserhalb dieses Bereichs von $\pm \alpha_S$ um die Nulldurchgänge der Rotormagnetisierung bzw. der Flussverteilungsfunktion liegt. Die Grösse von $\alpha_S$ hängt natürlich von der konkreten Ausgestaltung des Rotors 1 ab. Im hier beschriebenen Beispiel beträgt sie beispielsweise etwa 10°.

Unter Berücksichtigung dieser Verschmierung werden die Sensoren LS1, LS2, LS3 deshalb vorzugsweise so angeordnet, dass bei dem hier beschriebenen Beispiel für die Winkel $\alpha_1$, $\alpha_2$, $\alpha_3$ der drei Messorte die folgende Beziehung gilt:

$$k \cdot 90° + \alpha_S < |\alpha_i - \alpha_j| < (k+1) \cdot 90° - \alpha_S$$

mit: i,j=1,2,3; i≠j; k = 0,±1,±2,± ... Ansonsten sind die Winkel $\alpha_1$, $\alpha_2$, $\alpha_3$ prinzipiell beliebig wählbar.

Es ist besonders vorteilhaft, auch im Hinblick auf eine einfache Auswertung, wenn die Lagesensoren LS1,LS2,LS3 so angeordnet sind, dass die Beträge der Winkeldifferenzen $|\alpha_i - \alpha_j|$ jeweils gleich einem ganzzahligen Vielfachen von 60° sind. Eine solche Anordnung ist in Fig. 9 für den vierpolig, blockförmig magnetisierten Rotor 1 gezeigt. Bei diesem Beispiel der Anordnung ist $\alpha_1$=90°, $\alpha_2$=30° und $\alpha_3$= -30°. Die Nulldurchgänge der Rotormagnetisierung bzw. der Flussverteilungsfunktion liegen jeweils bei der Trennfläche zwischen zwei benachbarten permanentmagnetischen Ringsegmenten 10a. Fig. 9 zeigt in der oberen Abbildung den Fall, dass der Lagesensor LS1 bei einem Nulldurchgang liegt, was für Rotorwinkel $\alpha_R = \alpha_1 + 45° + k \cdot 90°$ der Fall ist. In der mittleren Abbildung liegt der Lagesensor LS2 bei einem Nulldurchgang, was für Rotorwinkel $\alpha_R = \alpha_2 + 45° + k \cdot 90°$ der Fall ist. In der unteren Abbildung liegt der Lagesensor LS3 bei einem Nulldurchgang, was für Rotorwinkel $\alpha_R = \alpha_3 + 45° + k \cdot 90°$ der Fall ist. Es ist zu erkennen, dass in allen Fällen jeweils zwei der Lagesensoren LS1,LS2 oder LS3 deutlich von den Nulldurchgängen entfernt sind, sodass immer mindestens zwei der Lagesensoren LS1,LS2,LS3 ein auswertbares Signal liefern. Somit ist für jeden beliebigen Rotorwinkel $\alpha_R$ die radiale Position des Rotors 1 bezüglich der X-Y-Ebene des Statorsystems bestimmbar.

Eine solche Anordnung von drei Sensoren LS1,LS2,LS3, bei der für jeden beliebigen Rotorwinkel $\alpha_R$ mindestens zwei der Sensoren nicht bei einem Nulldurchgang der Flussverteilungsfunktion liegen, lässt sich für jede beliebige Form der Rotormagnetisierung und für jede Polpaarzahl des Rotors 1 finden.

Aus sinngemäss gleichen Gründen, wie sie bereits vorne erläutert wurden, ist es auch für das zweite Ausführungsbeispiel eine vorteilhafte Massnahme, wenn jeder Sensor LS1,LS2,LS3 jeweils zwei Sensorelemente umfasst, die bezüglich der Soll-Drehachse A des Rotors bzw. der Z-Achse des Statorsystems um 180° in Drehrichtung D des Rotors 1 versetzt zueinander angeordnet sind. Auch bei dem zweiten Ausführungsbeispiel können die Sensoren bzw. die Sensorelemente in der X-Y-Ebene des Statorsystems oder in axialer Richtung versetzt zu dieser angeordnet sein.

Ferner ist es möglich, durch Anordnungen mit mehr als drei Sensoren eine Redundanz bzw. eine Fehlertoleranz zu erzielen.

Es versteht sich, dass die erfindungsgemässe Sensoranordnung natürlich auch mehr als drei Sensoren LS1,LS2,LS3 umfassen kann bzw. das erfindungsgemässe Verfahren mit mehr als drei Sensoren LS1,LS2,LS3 durchgeführt werden kann.

Im folgenden wird nun noch ein drittes Ausführungsbeispiel der erfindungsgemässen Sensoranordnung bzw. des erfindungsgemässen Verfahrens beschrieben, das sich insbesondere dadurch auszeichnet, dass die radiale Position des permanentmagnetischen Rotors 1 bestimmbar ist, ohne dass dafür der momentane Rotorwinkel $\alpha_R$ explizit bekannt sein muss. Dieses dritte Ausführungsbeispiel ist insbesondere für sinusförmig magnetisierte Rotoren (siehe z. B. Fig. 5) geeignet, wobei es prinzipiell egal ist, welche Polpaarzahl der Rotor 1 aufweist. Der Einfachheit halber wird beispielhaft angenommen, dass die Polpaarzahl des Rotors 1 gleich eins ist. Die magnetische Flussverteilung im Luftspalt zwischen Rotor 1 und Stator 2 bei zentriertem Rotor 1 kann für einen solchen zweipolig sinusförmig magnetisierten Rotor 1 durch die folgende Flussverteilungsfunktion beschrieben werden:

$$B_0(\alpha) = B_0{}^* \cdot \cos(\alpha_R - \alpha)$$

Dabei bezeichnet $\alpha_R$, wie bereits weiter vorne erklärt, den aktuellen Rotorwinkel, $\alpha$ die Laufvariable und $B_0{}^*$ die Amplitude.

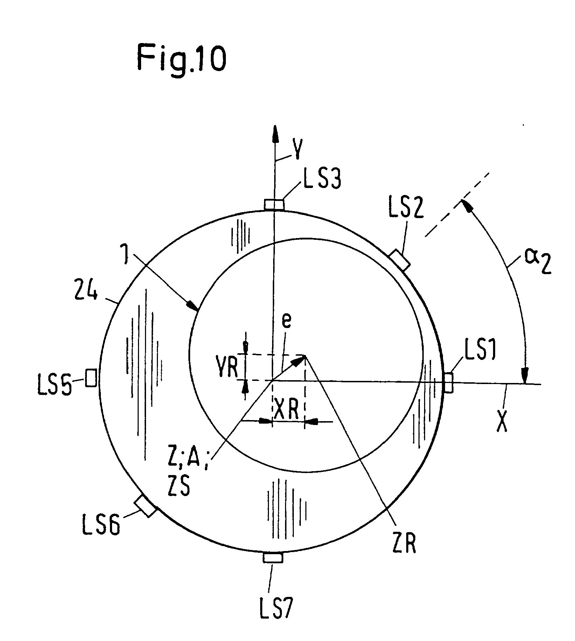

Bei diesem dritten Ausführungsbeispiel sind insgesamt sechs Sensoren bzw. Sensorelemente LS1,LS2,LS3,LS5,LS6, LS7 vorgesehen, mit denen der vom Rotor 1 erzeugte magnetische Fluss im Raum zwischen dem Rotor 1 und dem Stator 2 an sechs unterschiedlichen Messorten bestimmbar ist. Die Sensoren LS1,LS2,LS3,LS5,LS6, LS7 sind jeweils mit der Auswerteeinheit 3 verbunden. Eine mögliche Anordnung der sechs Sensoren ist in Fig. 10 dargestellt. Die Sensoren sind im Statorsystem an Orten platziert, welche durch die Polarwinkel $\alpha_i$ mit i=1,2,3,5,6,7 beschrieben werden. In dem hier beschriebenen Ausführungsbeispiel ist $\alpha_1$=0°; $\alpha_2$=45°; $\alpha_3$=90°; $\alpha_5$=180°; $\alpha_6$=225° und $\alpha_7$=270°, das heisst jeweils zwei der Sensoren LS1,LS2,LS3,LS5,LS6, LS7 sind diametral gegenüberliegend zueinander angeordnet. Die Sensoren können analog zu der in Fig. 2 dargestellten Anordnung jeweils in der X-Y-Ebene des Statorsystems angeordnet sein. Vorzugsweise sind die Sensoren jedoch, analog wie in Fig. 4 gezeigt, etwas ober- bzw. unterhalb des X-Y-Ebenen angeordnet, also axial versetzt bezüglich der X-Y-Ebene, weil hierdurch Verkippungen des Rotors 1 regeltechnisch einfacher zu kompensieren sind.

Fig. 10 zeigt den Rotor 1 in einer exzentrischen Position. Unter Einbehaltung der bereits vorne eingeführten Nomenklatur ist die radiale Position des Rotors 1 im Statorsystem dann bekannt, wenn die kartesischen Koordinaten XR und YR des Zentrums ZR des Rotors 1 im Statorsystem ermittelt sind.

Wie bereits vorne dargelegt wird die Flussverteilung im Luftspalt für den exzentrischen Rotor mit der Auslenkung e durch eine Flussverteilungsfunktion $B_e(\alpha)$ beschrieben, für die gilt:

$$B_e(\alpha) = B_0(\alpha) / [1 - \varepsilon \cdot \cos(\alpha - \varphi)],$$

mit der dimensionslosen Exzentrität $\varepsilon = e/d_0$. Für $\varepsilon \ll 1$ ergibt sich mit der obengenannten Flussverteilungsfunktion $B_0(\alpha)$:

$$B_e(\alpha) \approx B_0^* \cdot \cos(\alpha_R - \alpha) \cdot (1 + \varepsilon \cdot \cos(\varphi - \alpha))$$

$$= B_0^* \cdot \cos(\alpha_R - \alpha) + 0.5\, B_0^* \cdot \varepsilon \cdot \cos(\alpha_R + \varphi - 2\alpha) + 0.5\, B_0^* \cdot \varepsilon \cdot \cos(\alpha_R - \varphi)$$

Bezeichnet man mit $H_i$ (i=1,2,3,5,6,7) denjenigen magnetischen Fluss, der vom Sensor LSi an dem durch den Polarwinkel $\alpha_i$ beschriebenen Messort bestimmt wird, also $H_i = B_e(\alpha_i)$ mit i=1,2,3,5,6,7, so sind die kartesischen Koordinaten XR,YR der Auslenkung des Rotors 1 gemäss der folgenden Beziehung bestimmbar:

$$\begin{bmatrix} XR \\ YR \end{bmatrix} = \frac{d_0}{(H_1 - H_5)^2 + (H_3 - H_7)^2} \cdot \begin{bmatrix} (H_1 - H_5) & (H_3 - H_7) \\ -(H_3 - H_7) & (H_1 - H_5) \end{bmatrix} \cdot \begin{bmatrix} (H_1 + H_5) - (H_3 + H_7) \\ 2(H_2 + H_6) - (H_3 + H_7) - (H_1 + H_5) \end{bmatrix}$$

Es ist zu erkennen, dass somit die radiale Position des Rotors 1 direkt aus den an den sechs Messorten bestimmten Werten des vom Rotor 1 erzeugten magnetischen Flusses bestimmbar ist, ohne dass dafür der aktuelle Wert des Rotorwinkels $\alpha_R$ explizit bekannt sein muss oder berechnet werden muss. Die radiale Position des Rotors 1 ergibt sich unmittelbar durch sehr einfache additive bzw. multiplikative Verknüpfungen der an den Messorten ermittelten magnetischen Flüsse. Aufwendigere Rechenoperationen wie trigonometrische Berechnungen oder Vergleiche mit elektronisch gespeicherten Nachschlagetabellen sind nicht vonnöten. Dies hat den Vorteil, dass die Bestimmung der radialen Position des Rotors numerisch sehr einfach und somit auch sehr schnell erfolgen kann, was sich positiv auf die erzielbare Messfrequenz und somit auf die Regelung der Rotorlage auswirkt.

Es versteht sich, dass die in Fig. 10 dargestellte Anordnung der Sensoren LS1,LS2,LS3,LS5,LS6,LS7 und insbesondere die konkreten Werte der Winkel $\alpha_i$ beispielhaft zu verstehen sind. Es sind durchaus auch andere Anordnungen der Sensoren möglich, wobei dann die Bestimmungsgleichung für XR und YR entsprechend anzupassen ist. Auch bezüglich der Anzahl der Sensoren sind zahlreiche andere Varianten möglich. Will man jedoch die radiale Rotorposition des sinusförmig magnetisierten Rotors 1 für jeden beliebigen Rotorwinkel $\alpha_R$ bestimmen können, ohne den jeweils aktuellen Rotorwinkel $\alpha_R$ explizit zu kennen, so müssen mindestens fünf Sensoren bzw. Sensorelemente vorgesehen sein, das heisst der vom Rotor 1 erzeugte magnetische Fluss muss an mindestens fünf unterschiedlichen Messorten bestimmt werden.

Eine Ausführungsform gemäss dem dritten Ausführungsbeispiel mit nur fünf Sensoren LS1,LS2,LS3,LS5,LS7 kann beispielsweise so realisiert werden, dass man bei der in Fig. 10 dargestellten Anordnung auf den Sensor LS6 verzichtet. Die fünf Sensoren sind dann also bei den Polarwinkeln $\alpha_1=0°$; $\alpha_2=45°$; $\alpha_3=90°$; $\alpha_5=180°$ und $\alpha_7=270°$ angeordnet. Für die kartesischen Koordinaten XR,YR der Auslenkung gilt dann:

$$\begin{bmatrix} XR \\ YR \end{bmatrix} = \frac{d_0}{(H_1 - H_5)^2 + (H_3 - H_7)^2} \cdot \begin{bmatrix} (H_1 - H_5) & (H_3 - H_7) \\ -(H_3 - H_7) & (H_1 - H_5) \end{bmatrix} \begin{bmatrix} (H_1 + H_5) - (H_3 + H_7) \\ C \end{bmatrix}$$

mit C = 4(H$_2$-0.25[(H$_1$+H$_5$)+(H$_3$+H$_7$)] - 0.5[(H$_1$-H$_5$)+(H$_3$-H$_7$)]cos 45°)

Bevorzugt sind jedoch solche Ausführungsformen des dritten Ausführungsbeispiels, bei denen eine gerade Anzahl von Sensoren, also beispielsweise sechs -wie vorne beschrieben - oder acht Sensoren usw. vorgesehen sind, die insbesondere jeweils paarweise diametral gegenüberliegend zueinander angeordnet sind. Eine solche symmetrische Anordnung der Sensoren hat nämlich den Vorteil, dass Verkippungen des Rotors 1 regeltechnisch einfacher zu kompensieren sind. Zudem reagiert eine solche symmetrische Sensoranordnung deutlich weniger sensitiv auf axiale Verschiebungen des Rotors.

Natürlich ist die erfindungsgemässe Sensoranordnung bzw. das erfindungsgemässe Verfahren nicht auf die hier expliziet beschriebenen Formen der Rotormagnetiesierung beschränkt. Sie sind insbesondere auch für permanentmagnetischen Rotoren mit höheren Polpaarzahlen und/oder anderen Formen der Magnetisierung geeignet.

**Patentansprüche**

1.  Verfahren zum Bestimmen der radialen Position eines permanentmagnetischen Rotors (1) in einem elektromagnetischen Drehantrieb, der als lagerloser Motor mit einem Stator (2) und dem magnetisch gelagerten Rotor (1) ausgestaltet ist, wobei der Stator (2) als Lager- und Antriebsstator ausgestaltet ist und der Drehantrieb keine separaten Magnetlager für den Rotor aufweist, bei welchem Verfahren mittels Sensoren (LS1,LS2,LS3) der vom Rotor (1) erzeugte magnetische Fluss im Raum zwischen dem Rotor (1) und dem Stator (2) an mindestens zwei unterschiedlichen Messorten bestimmt wird, **dadurch gekennzeichnet, dass** die radiale Position des Rotors (1) mit Hilfe des an den Messorten bestimmten magnetischen Flusses und mit Hilfe des magnetischen Flusses, der bei zentrisch angeordnetem Rotor (1) an den Messorten resultiert, ermittelt wird.

2.  Verfahren nach Anspruch 1, bei welchem die Messorte so gewählt werden, dass die radiale Position des Rotors (1) mit Hilfe des magnetischen Flusses an höchstens drei Messorten für jeden beliebigen Rotorwinkel ($\alpha_R$) bestimmbar ist.

3.  Verfahren nach einem der Ansprüche 1 oder 2, bei welchem der magnetische Fluss im Raum zwischen dem Rotor (1) und dem Stator (2) an drei verschiedenen Messorten bestimmt wird, die so gewählt werden, dass für jeden beliebigen Rotorwinkel ($\alpha_R$) die Winkellage von mindestens zwei der Messorte von der Winkellage der Nulldurchgänge der Rotormagnetisierung verschieden ist.

4.  Verfahren nach Anspruch 1, bei welchem der vom Rotor (1) erzeugte magnetische Fluss im Raum zwischen dem Rotor (1) und dem Stator (2) an mindestens fünf unterschiedlichen Messorten bestimmt wird.

5.  Verfahren nach Anspruch 4, bei welchem der vom Rotor (1) erzeugte magnetische Fluss im Raum zwischen dem Rotor (1) und dem Stator (2) an einer geraden Anzahl von Messorten bestimmt wird.

6.  Verfahren nach einem der Ansprüche 1-5, bei welchem zusätzlich der magnetische Fluss im Raum zwischen dem Rotor (1) und dem Stator (2) an denjenigen Orten bestimmt und zur Ermittelung der radialen Position des Rotors (1) herangezogen wird, die bezüglich der Messorte um 180° in Drehrichtung (D) des Rotors (1) gesehen versetzt sind.

7.  Elektromagnetischer Drehantrieb, der als lagerloser Motor mit einem Stator (2) und einem permanentmagnetischen Rotor (1) ausgestaltet ist, wobei der Stator (2) als Lager- und Antriebsstator ausgestaltet ist und der Drehantrieb keine separaten Magnetlager für den Rotor aufweist, mit einer Sensoranordnung zum Bestimmen der radialen Position des magnetisch gelagerten Rotors(1), mit mindestens zwei Sensoren (LS1,LS2,LS3) zum Bestimmen des vom Rotor (1) erzeugten magnetischen Flusses im Raum zwischen dem Rotor (1) und dem Stator (2) an mindestens zwei unterschiedlichen Messorten, **dadurch gekennzeichnet, dass** eine Auswerteeinheit (3) vorgesehen ist, welche die radiale Position des Rotors (1) mit Hilfe des an den Messorten bestimmten magnetischen Flusses und mit Hilfe des magnetischen Flusses, der bei zentrisch angeordnetem Rotor (1) an den Messorten resultiert, bestimmen kann.

8.  Drehantrieb nach Anspruch 7, bei welchem drei Sensoren so angeordnet sind, dass die Auswerteeinheit (3) die radiale Position des Rotors (1) mit Hilfe des magnetischen Flusses an den drei zugehörigen Messorten für jeden beliebigen Rotorwinkel ($\alpha_R$) bestimmen kann.

9.  Drehantrieb nach einem der Ansprüche 7 oder 8 mit mindestens drei Sensoren (LS1,LS2,LS3), die so angeordnet sind, dass mit ihnen der magnetische Fluss im Raum zwischen dem Rotor (1) und dem Stator (2) an drei unterschiedlichen Messorten bestimmbar ist, deren Lage so ist, dass für jeden beliebigen Rotorwinkel ($\alpha_R$) die Winkellage von mindestens zwei Messorten von der Winkellage der Nulldurchgänge der Rotormagnetisierung verschieden ist.

10. Drehantrieb nach Anspruch 7, mit mindestens fünf Sensoren (LS1,LS2,LS3,LS5,LS6,LS7) zum Bestimmen des vom Rotor (1) erzeugten magnetischen Flusses an mindestens fünf unterschiedlichen Messorten.

11. Drehantrieb nach Anspruch 10 mit einer geraden Anzahl von Sensoren (LS1,LS2,LS3,LS5,LS6,LS7).

12. Drehantrieb nach einem der Ansprüche 7-11, wobei der Stator (2) mehrere radial in Richtung auf den Rotor (1) verlaufende Statorzähne (20) aufweist, und bei welcher die Sensoren (LS1,LS2,LS3,LS5,LS6,LS7) jeweils in einer Lücke (21) zwischen zwei benachbarten Statorzähnen (20) angeordnet sind.

13. Drehantrieb nach einem der Ansprüche 7-12, bei welchem jeder Sensor (LS1,LS2,LS3) zwei Sensorelemente (LS11,LS12,LS21,LS22) umfasst, die bezüglich der Soll-Drehachse (A) des Rotors (1) um 180° in Drehrichtung (D) des Rotors (1) versetzt zueinander angeordnet sind.

**Claims**

1. A method for the determination of the radial position of a permanent magnetic rotor (1) in an electromagnetic rotary drive which is designed as a bearing-less motor having a stator (2) and the magnetically journalled rotor (1), wherein the stator (2) is designed as a bearing stator and drive stator and the rotary drive does not have any separate magnetic bearings for the rotor in which method the magnetic flux generated by the rotor (1) in the space between the rotor (1) and the stator (2) is determined at at least two different measurement sites by means of sensors (LS1, LS2, LS3), **characterised in that** the radial position of the rotor (1) is determined with the help of the magnetic flux determined at the measurement sites and with the help of the magnetic flux which results at the measurement sites with a centrally arranged rotor (1).

2. A method in accordance with claim 1, wherein the measurement sites are selected such that the radial position of the rotor (1) can be determined with the help of the magnetic flux at at the most three measurement sites for any desired rotor angle ($\alpha_R$).

3. A method in accordance with one of the claims 1 or 2, wherein the magnetic flux in the space between the rotor (1) and the stator (2) is determined at three different measurement sites which are selected such that the angular position of at least two of the measurement sites is different from the angular position of the zero crossings of the rotor magnetisation for any desired rotor angle ($\alpha_R$).

4. A method in accordance with claim 1, wherein the magnetic flux generated by the rotor (1) in the space between the rotor (1) and the stator (2) is determined at at least five different measurement sites.

5. A method in accordance with claim 4, wherein the magnetic flux generated by the rotor (1) in the space between the rotor (1) and the stator (2) is determined at an even number of measurement sites.

6. A method in accordance with any one of the claims 1-5, wherein the magnetic flux in the space between the rotor (1) and the stator (2) is additionally determined and is used for the determination of the radial position of the rotor (1) at those sites which are offset by 180° with respect to the measurement sites viewed in the direction of rotation (D) of the rotor (1).

7. An electromagnetic rotary drive which is designed as a bearing-less motor having a stator (2) and a permanent magnetic rotor (1), wherein the stator (2) is designed as a bearing stator and drive stator and the rotary drive does not have any separate magnetic bearings for the rotor, having a sensor arrangement for the determination of the radial position of the magnetically journalled rotor (1), having at least two sensors (LS1, LS2, LS3) for the determination of the magnetic flux generated by the rotor (1) in the space between the rotor (1) and the stator (2) at at least two different measurement sites, **characterised in that** an evaluation unit (3) is provided which can determine the radial position of the rotor (1) with the help of the magnetic flux determined at the measurement sites and with the help of the magnetic flux which results at the measurement sites with a centrally arranged rotor (1).

8. A rotary drive in accordance with claim 7, wherein three sensors are arranged such that the evaluation unit (3) can determine the radial position of the rotor (1) with the help of the magnetic flux at the three associated measuring sites for any desired rotor angle ($\alpha_R$).

9. A rotary drive in accordance with one of the claims 7 or 8 having at least three sensors (LS1, LS2, LS3) which are arranged such that the magnetic flux in the space between the rotor (1) and the stator (2) can be determined with them at three different measurement sites whose position is such that the angular position of at least two measurement sites is different from the angular position of the zero crossings of the rotor magnetisation for any desired rotor angle ($\alpha_R$).

10. A rotary drive in accordance with claim 7, having at least five sensors (LS1, LS2, LS3, LS5, LS6, LS7) for the determination of the magnetic flux generated by the rotor (1) at at least five different measurement sites.

11. A rotary drive in accordance with claim 10 having an even number of sensors (LS1, LS2, LS3, LS5, LS6, LS7).

12. A rotary drive in accordance with any one of the claims 7-11, wherein the stator (2) has a plurality of stator teeth (20) extending radially in the direction of the rotor (1) and wherein the sensors (LS1, LS2, LS3, LS5, LS6, LS7) are each arranged in a gap (21) between two adjacent stator teeth (20).

13. A rotary drive in accordance with any one of the claims 7-12, wherein each sensor (LS1, LS2, LS3) includes two sensor elements (LS11, LS12, LS21, LS22) which are arranged offset to one another by 180° in the direction of rotation (D) of the rotor (1) with respect to the desired axis of rotation (A) of the rotor (1).

**Revendications**

1. Procédé de détermination de la position radiale d'un rotor (1) à aimants permanents dans un entraînement en rotation électromagnétique, qui est réalisé comme moteur sans palier avec un stator (2) et le rotor (1) logé de manière magnétique, où le stator (2) est réalisé comme stator de palier et d'entraînement et l'entraînement en rotation ne présente pas de paliers magnétiques séparés pour le rotor, procédé dans lequel est déterminé au moyen de capteurs (LS1,LS2,LS3) le flux magnétique produit par le rotor (1) dans l'espace entre le rotor (1) et le stator (2) à au moins deux emplacements de mesure différents, **caractérisé en ce que** la position radiale du rotor (1) est obtenue à l'aide du flux magnétique défini aux emplacements de mesure et à l'aide du flux magnétique qui, lorsque le rotor (1) est disposé au centre, est obtenu aux emplacements de mesure.

2. Procédé selon la revendication 1, dans lequel les emplacements de mesure sont sélectionnés de façon que la position radiale du rotor (1) peut être déterminée à l'aide du flux magnétique au maximum à trois emplacements de mesure pour chaque angle de rotor sélectif ($\alpha_R$).

3. Procédé selon l'une des revendications 1 ou 2, dans lequel le flux magnétique dans l'espace entre le rotor (1) et le stator (2) est déterminé à trois emplacements de mesure différents, qui sont sélectionnés de façon que pour chaque angle de rotor sélectif ($\alpha_R$), la position angulaire d'au moins deux des emplacements de mesure diffère de la position angulaire des passages par zéro de l'aimantation du rotor.

4. Procédé selon la revendication 1, dans lequel le flux magnétique produit par le rotor (1) est déterminé dans l'espace entre le rotor (1) et le stator (2) à au moins cinq emplacements de mesure différents.

5. Procédé selon la revendication 4, dans lequel le flux magnétique produit par le rotor (1) est déterminé dans l'espace entre le rotor (1) et le stator (2) à un nombre pair d'emplacements de mesure.

6. Procédé selon l'une des revendications 1 à 5, dans lequel est déterminé additionnellement le flux magnétique dans l'espace entre le rotor (1) et le stator (2) auxdits emplacements et est utilisé pour déterminer la position radiale du rotor (1), qui sont décalés relativement aux emplacements de mesure de 180° en regardant dans la direction de rotation (D) du rotor (1).

7. Entraînement en rotation électromagnétique, qui est réalisé comme moteur sans palier avec un stator (2) et un rotor (1) à aimants permanents, où le stator (2) est réalisé comme stator de palier et d'entraînement et l'entraînement en rotation ne présente pas de palier magnétique séparé pour le rotor, avec un agencement de capteurs pour déterminer la position radiale du rotor logé de manière magnétique (1), avec au moins deux capteurs (LS1,LS2,LS3) pour déterminer le flux magnétique produit par le rotor (1) dans l'espace entre le rotor (1) et le stator (2) à au moins deux emplacements de mesure différents, **caractérisé en ce qu'**une unité d'évaluation (3) est prévue qui peut déterminer la position radiale du rotor (1) à l'aide du flux magnétique déterminé aux emplacements de mesure et à l'aide du flux magnétique obtenu lors de la disposition au centre du rotor (1) aux emplacements de mesure.

8.  Entraînement en rotation selon la revendication 7, dans lequel trois capteurs sont disposés de telle sorte que l'unité d'évaluation (3) peut déterminer la position radiale du rotor (1) à l'aide du flux magnétique aux trois emplacements de mesure associés pour chaque angle de rotor sélectif ($\alpha_R$).

9.  Entraînement en rotation selon l'une des revendications 7 ou 8 avec au moins trois capteurs (LS1,LS2,LS3), qui sont disposés de telle sorte qu'au moyen de ceux-ci le flux magnétique peut être déterminé dans l'espace entre le rotor (1) et le stator (2) à trois emplacements de mesure différents, dont la position est telle que pour chaque angle de rotor sélectif ($\alpha_R$), la position angulaire d'au moins deux emplacements de mesure diffère de la position angulaire des passages par zéro de l'aimantation du rotor.

10. Entraînement en rotation selon la revendication 7, avec au moins cinq capteurs (LS1,LS2,LS3,LS5,LS6,LS7) pour déterminer le flux magnétique produit par le rotor (1) à au moins cinq emplacements de mesure différents.

11. Entraînement en rotation selon la revendication 10, avec un nombre pair de capteurs (LS1,LS2,LS3, LS5,LS6,LS7).

12. Entraînement en rotation selon l'une des revendications 7 à 11, dans lequel le stator (2) présente plusieurs dents de stator (20) s'étendant radialement en direction du rotor (1), et dans lequel les capteurs (LS1,LS2,LS3,LS5,LS6,LS7) sont disposés chacun dans un espace (21) entre deux dents de stator avoisinantes (20).

13. Entraînement en rotation selon l'une des revendications 7 à 12, dans lequel chaque capteur (LS1,LS2,LS3) comprend deux éléments de capteur (LS11,LS12,LS21,LS22) qui sont décalés relativement à l'axe de rotation de consigne (A) du rotor (1) selon 180° dans la direction de rotation (D) du rotor (1).

Fig.1

Fig.2

## Fig.3

## Fig.4

17

# Fig.5

# Fig.6

EP 0 982 836 B1

# Fig.7

# Fig.8

# Fig.9

# Fig.10

**IN DER BESCHREIBUNG AUFGEFÜHRTE DOKUMENTE**

**In der Beschreibung aufgeführte Patentdokumente**

- WO 9631934 A